(19) Europäisches Patentamt

European Patent Office

Office européen des brevets

(11) EP 2 488 705 B1

(12) **EUROPEAN PATENT SPECIFICATION**

(45) Date of publication and mention
of the grant of the patent:
**15.07.2015 Bulletin 2015/29**

(21) Application number: **10752831.7**

(22) Date of filing: **15.09.2010**

(51) Int Cl.:
*E04B 1/80* *(2006.01)*    *B32B 7/12* *(2006.01)*
*B32B 5/20* *(2006.01)*    *B32B 27/06* *(2006.01)*
*B32B 27/40* *(2006.01)*    *C09J 175/04* *(2006.01)*
*C08G 18/09* *(2006.01)*    *B32B 15/08* *(2006.01)*
*B32B 15/18* *(2006.01)*    *B32B 15/20* *(2006.01)*
*C08J 9/04* *(2006.01)*

(86) International application number:
**PCT/EP2010/063548**

(87) International publication number:
**WO 2011/045139 (21.04.2011 Gazette 2011/16)**

(54) **TWO-COMPONENT POLYISOCYANURATE ADHESIVE AND INSULATION PANELS PREPARED THEREFROM**

ZWEIKOMPONENTEN-POLYISOCYANURAT-KLEBSTOFF UND DAMIT HERGESTELLTE DÄMMPLATTEN

ADHÉSIF POLYISOCYANURATE À DEUX COMPOSANTS ET PANNEAUX ISOLANTS PRÉPARÉS AVEC CELUI-CI

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **15.10.2009 IT MI20091776**

(43) Date of publication of application:
**22.08.2012 Bulletin 2012/34**

(73) Proprietor: **Dow Global Technologies LLC**
**Midland, MI 48674 (US)**

(72) Inventors:
• **PELLACANI, Luigi**
**I-41012 Carpi (MO) (IT)**
• **DAVIDSON, Robert**
**Acworth**
**GA 30101 (US)**
• **FANGAREGGI, Alberto**
**I-42100 Reggio Emilia (RE) (IT)**
• **PIGNAGNOLI, Francesca**
**I-42100 Reggio Emilia (RE) (IT)**
• **GUANDALINI, Maurizio**
**I-42011 Bagnolo in Piano (RE) (IT)**

(74) Representative: **Beck Greener**
**Fulwood House**
**12 Fulwood Place**
**London WC1V 6HR (GB)**

(56) References cited:
**EP-A1- 1 516 720    US-A1- 2006 096 205**

**Description**

BACKGROUND OF THE INVENTION

1. Field of the Invention

The invention relates to the field of laminate structures of polyisocyanurate foam layers and various facer materials. More particularly, it relates to processes and materials for adhering the layers of such structures.

2. Background of the Art

The use of prefabricated foamed plastic materials for insulating purposes in building structures such as exterior or partition walls, bulkheads, ceilings, floors, storage tanks and roof structures is well known. Such foamed plastic materials are frequently designed as panels which offer relatively low thermal conductivity, generally by inclusion of certain blowing agents in the foaming formulations. Polyurethane and polyisocyanurate foams are often highly desired for their particularly good insulating efficiency, especially when the foam cells are predominantly closed, i.e., more than 80 % closed cells and preferably more than 85% closed cells, and contain not only carbon dioxide, which is produced by the reaction of the isocyanate with the chemical blowing agent (for instance, water), but also a physical blowing agent such as one of the hydrocarbon, hydrofluorocarbon, or hyrochlorofluorocarbon agents often used in this application. Unfortunately, it has been found that the insulating efficiency (R value) of these products may tend to decrease with age, an event that is often attributed to the permeation of air into the foam cells, while the carbon dioxide is leaking outside. Once air has entered the cells, its much higher gas thermal conductivity contributes to the R value reduction.
In attempting to avoid this problem, foamed plastics used for insulating purposes are often faced with materials which serve as gas barriers. Typical facer materials may include metal foils, such as aluminum foil. The facers, together with the foamed plastic panel, may be used to form layered or "laminate" structures frequently referred to as sandwich panels. Strength-enhancing materials, such as steels, may also be employed. One important property of the sandwich panel is the adhesion between the various layers, which may contribute to the overall product's durability. Panels with poor adhesion may effectively "delaminate" due to handling, use conditions, or simply over time. This means that all or a portion of the facing material may separate from the surface of the foamed plastic layer.
Polyisocyanurate foams represent an increasingly popular option for preparing sandwich panels, particularly due to the fact that polyisocyanurate foams often perform better in fire-related tests than do polyurethane foams. Unfortunately, when polyisocyanurate foams are prepared by conventional continuous or discontinuous production methods, wherein a reacting foam system is distributed between facings and simply expands to fill the space available, the level of adhesion may in some cases be relatively poor. Adhesion may be measured as the tensile strength required to separate the facing from the polyisocyanurate foam layer, and "relatively poor" is defined as requiring a tensile strength of less than 100 kilopascals (kPa). This relatively poor adhesion may, in term, lead to the delamination problem mentioned hereinabove. Delamination has a number of negative consequences, ranging from decreased aesthetics, to a loss of structural properties of the panel, to enablement of undesirable gas exchange across the newly exposed surface of the polyisocyanurate foam layer. Researchers have sought effective adhesives which may help to counter such delamination problems, but many are expensive or difficult to apply, and may not bond well with typical metal foil facings and/or with a polyisocyanate foam layer.
Accordingly, those skilled in the art continue to seek means and/or methods to improve the bond between polyisocyanurate foam layers and facing materials or other substrates as can be used in the production of sandwich panels.

SUMMARY OF THE INVENTION

The present invention provides a layered insulation panel comprising a polyisocyanurate foam layer having a layer surface adhered to a facing surface by a polyisocyanurate adhesive, provided that the polyisocyanurate adhesive has been interposed between the layer surface and the facing surface prior to completion of polymerization of both the layer surface and the polyisocyanurate adhesive.
The present invention further provides a method of preparing a layered insulation panel comprising the non-ordered steps of preparing a polyisocyanurate foam formulation; preparing a polyisocyanurate adhesive formulation; providing a facing layer; and distributing the foam formulation, the adhesive formulation, and the facing layer under conditions such that a layered insulation panel is formed, wherein the adhesive formulation is positioned between the facing layer and the foam formulation while both the adhesive formulation and the foam formulation are polymerizing and the foam formulation is forming a foam layer surface, such that at least a portion of the facing layer is adhered to at least a portion of the foam layer surface.

DETAILED DESCRIPTION OF THE EMBODIMENTS

It has surprisingly been found that, while it can be challenging to obtain good adhesion between one of many facing materials typically used in the construction industry and the polyisocyanurate foam layer of a foam-cored sandwich panel, the adhesion level may be substantially increased by using an adhesive that is, like the foam core, based on polyisocyanurate chemistry. Such facings are frequently metallic, and may have various thicknesses, ranging from thin metal foils (foils made of aluminum, tin, and alloys are particularly common), to thicker sheets (from 0.3 to 0.7 millimeters (mm), typically) of structurally enhancing materials, such as steel. These metal facings can be coated by thin polymeric coatings for various purposes, such as for improving the resistance to corrosion. Other materials, including paper of various types, wood, plastics, concrete and other composites, and combinations thereof, may also be employed as facings.

The invention requires a polyisocyanurate foam layer, which is, by definition, formed by reaction of a stoichiometric excess of a compound containing terminal isocyanate groups and a compound containing terminal isocyanate-reactive groups, in the presence of at least one trimerization catalyst and a blowing agent, under conditions enabling the polymerization reaction of the terminal isocyanate groups to form the polyisocyanurate structure. At the same time, other catalysts are triggering the reaction of the terminal isocyanate groups with the isocyanate-reactive groups, including water, that are present in the isocyanate-reactive material. Heat is generated, which causes the physical blowing agent to reach the boiling point, thus passing from the liquid to the gas phase. Overall, these reactions and processes results in progressive polymerization and foaming, which provides the cellular structure wherein the physical blowing agent is contained for insulative purposes. As per international convention, the polymer obtained by reaction of an isocyanate with an isocyanatereactive material will result in a polyisocyanurate polymer provided that the reaction takes place at an index of 1.8 or greater, i.e., there are at least 1.8 isocyanate groups to each isocyanate-reactive group. The 1.8 is a conventional limit, as even at very high indexes, the foam will not only contain the polyisocyanurate structures, but also the polyurethane (from the NCO + OH groups' reaction) and the polyurea (from the NCO + NH groups' reaction) structures. Generally the index will be 7 or less. In other embodiments the index will be less than 6.5 or less than 6.

Those skilled in the art will be aware of a wide variety of materials that are suitable for the isocyanate group-containing and isocyanate-reactive group-containing components, as well as the trimerization catalyst and blowing agent and other additives, and will also know that there are a variety of combinations of such selections and conditions under which the polymerization reaction may be satisfactorily carried out.

Isocyanate Group-Containing Component Selection

Monomeric isocyanates include those having two or more NCO functionalities. Examples of monomeric isocyanates include toluene diisocyanate (TDI), diphenylmethane diisocyanate (MDI), hexamethylene diisocyanate (HDI), and isophorone diisocyanate (IPDI). Of particular use are the polymeric methylene diphenyl diisocyanates, which as used herein are referred to collectively as "PMDI." One non-limiting example is crude MDI, i.e., a mixture of 45-55 percent by weight of methylene diphenyl diisocyanate monomers (the 2,4'-and 4,4'-isomers), and the balance being oligomers, such as dimers and trimers. Those with higher amounts of the 4,4'-isomer include, for example, RUBINATE™ 1850 and RUBINATE™ 9257. Other useful polymeric isocyanates include, for example, those with a high amount of the 2,4'-isomer, such as RUBINATE™ 9485 and RUBINATE™ 9433 (RUBINATE™ is a trademark of Huntsman) and VORANATE™ 2940 (VORANATE™ is a trademark of The Dow Chemical Company). In general, crude MDI grades with kinematic viscosities ranging from 40 to 1000 millipascalsseconds (mPa·s) (0.04 to 1 pascal·seconds, Pa·s) at 25°C, and preferably from 100 up to 800 mPa·s (0.1 to 0.8 Pa·s) at 25°C, according to ASTM D4889 ("Standard Test Methods for Polyurethane Raw Materials: Determination of Viscosity of Crude or Modified Isocyanates"), may be used for the purposes of this invention.

Isocyanate Reactive Group-Containing Component Selection

The polyisocyanurate foam layers further require at least one isocyanate-reactive compound. This means that the compound has one or more isocyanate-reactive functionalities selected from OH-groups, acidic CH-groups, SH-groups, NH-groups, $NH_2$-groups and other isocyanate-reactive groups such as beta-diketo groups. Preferably the isocyanate-reactive compounds are polyether polyols or polyester polyols having OH numbers of preferably from 30 to 1000 mg KOH/g, more preferably from 40 to 900 mg KOH/g. Their average functionality is in the range from 2 to 8, preferably in the range from 2 to 6.

Suitable polyols are widely available and generally known to those skilled in the art. Suitable non-limiting examples may include those available from The Dow Chemical Company such as VORANOL™ 800, 490, 360, or 230-112, or RN 482, which are secondary polyether polyols, or TERCAROL™ 5902, which contains both primary and secondary hydroxyl groups, or polyethyleneglycol 400 (PEG 400) which is a diol containing only primary hydroxyl groups.

Also suitable are polyester polyols, such as STEPANPOL™ PS 2502A, available from Stepan Chemical Company, which is a polyester polyol featuring an aromatic ring content. Also suitable are aliphatic polyester polyols such as the poly(ethylene glycol) adipate, the poly(propylene glycol) adipate and, in general, polyesters prepared from a saturated diacid, such as adipic, glutaric,succinic acid, or its anhydride, and a saturated diol. An example of an aliphatic polyester is DIEXTER™ DG218, which is available from C.O.I.M. S.p.A. Also suitable for the purposes of this invention, are other isocyanate-reactive compounds that may be considered as specialty materials, such as polycarbonate polyols, polycaprolactone polyols and polytetrahydrofuran polyols, or polyols of natural origin such as the castor oil. Also included in the scope of the present invention are the primary or secondary amine-terminated isocyanate-reactive compounds, such as those available under the tradename JEFFAMINE™ T-5000, or aromatic derivatives such as the diethyl toluenediamine.

Catalyst Selection

Suitable trimerization catalysts include those compounds employed to expedite and facilitate the trimerization of isocyanates. Useful trimerization catalysts include alkali metal phenolates, alkali metal carboxylates, and alkoxides. The phenolates may also be referred to as phenoxides. Exemplary alkali metals include lithium, sodium, potassium, rubidium, cesium, and francium. Exemplary phenolate ligands may include p-nonyphenolate, p-octylphenolate, p-tert-butylphenolate, and various alkylphenol-formaldehydes. Preferred alkali metal phenolates include potassium, sodium, and lithium p-nonylphenolate. Alkali metal phenolates, such as potassium p-nonylphenoxide, can be formed from the reaction of p-nonylphenol and potassium hydroxide, preferably within toluene or ethyl acetate. Useful alkali metal carboxylates may include potassium, sodium, and lithium carboxylates, such as salts of 2-ethylhexanoic acid, acetic acid, propionic acid, butyric acid, and combinations thereof. Also suitable as trimerization catalysts are certain quaternary ammonium-based derivatives, such as TOYOCAT™ TRX, a catalyst available from Tosoh, or certain tertiary nitrogen derivatives, such as POLYCAT™ 41, available from Air Products. The amount of catalyst used can vary based on the activity of the catalyst. Generally, the proportions of trimer catalyst will fall within a range of about 0.01 to about 15 parts per 100 parts of the polyol.

Conventional polyurethane catalysts include those catalysts typically employed in the art to expedite or facilitate the reaction between ethylene oxide or propylene oxide based polyols, polyester polyols, or other type of isocyanate-reactive compounds, including water, with isocyanates. Conventional polyurethane catalysts include, but are not limited to, tin$^{+4}$ salts, such as dibutyltin dilaureate, dimethyltin dilaurate, and dibutyltin diacetate. Some of these catalysts are commercially available under the tradename FOAMEX™ SUL-4 (Witco Corporation) and DABCO™ T-12 (Air Products). Other tertiary amine catalysts suitable for the purposes of this invention are those available under the trademarks POLYCAT™, DABCO™ and CURITHANE™, from Air Products; those available under the trademark TOYOCAT™, from Tosoh; and those available under the trademark JEFFCAT™, from Huntsman. Certain compounds may act in the invention as both the polyol and catalyst component, such as, for instance, tertiary amine containing polyols, such as the VORANOL™ 800, available from The Dow Chemical Company. When present, the amount of amine catalysts can vary from 0.02 to 5 percent in the formulation and the amount of organometallic catalysts from 0.001 to 1 percent in the formulation can be used.

Blowing Agent Selection

Blowing agents that may be selected include the physical blowing agents, the chemical blowing agents, or both. The physical blowing agents may include hydrocarbons such as pentane, propane and butane; hydrofluorocarbons such as HFC-134a; chlorofluorocarbons such as CFC-11; hydrochlorocarbons such as trans dichloroethylene; hydrochlorofluorocarbons such as HCFC-141b; perfluorocompounds; and hydrofluorinated alkene derivatives: Also suitable as physical blowing agents are gases such as nitrogen, carbon dioxide, and krypton, and esters such as ethyl formate or methyl formate; acetals such as methylal; and other molecules such as acetone and dimethyl carbonate. Suitable chemical blowing agents include, in particular, water, which generates carbon dioxide upon reaction with the isocyanate. Other chemical blowing agents may include carboxylic acids in general, and formic acid in particular. The blowing agent is used generally in a quantity, such that the resulting polyisocyanurate foam has a density preferably from 20 to 400 grams per liter (g/L), more preferably from 25 to 200 g/L, and most preferably from 30 to 100 g/L. In particular and non-limiting embodiments, the physical blowing agent is selected such that it will remain in closed cells where the polyisocyanurate foam layer is a closed cell rigid foam and the blowing agent increases the insulation value of the polyisocyanurate foam layer to a level that is significantly greater than when other substances with relatively low insulative contribution, such as carbon dioxide, are present inside the foam cells. On the other hand, the blowing agents are desirably used at a much lower level in the polyisocyanurate adhesive formulation, such that the resulting polyisocyanurate adhesive has a density that, in certain non-limiting embodiments, ranges from 300 to 1300 g/L, preferably from 500 to 1100 g/L.

Formulation Additives, Assistants and Additional Constituents Selection

Solvents may be employed in some polyisocyanurate formulations where they serve primarily as polymerization diluents. When solvents are employed, organic/nonpolar solvents are preferred. Examples may include acetone, toluene, and methylethylketone.

Other useful additives, assistants and additional constituents may be used. In the above description, "additive" refers to compounds that do not carry isocyanate-reactive groups, while "constituents" refers to compounds that carry isocyanate-reactive groups. "Assistants" do not carry isocyanate-reactive groups and are used only to enhance the effect of an additive. One type of reactive constituents are the chain extenders and/or crosslinkers. Frequently employed for this role are two- or three-functional polyamines and polyols, in particular diols and/or triols with molecular weights below 600, preferably below 400.

Also frequently included in polyisocyanurate formulations are flame retardant compounds, in particular the halogen- and/or phosphorus-containing additives or constituents. Examples may include tricresyl phosphate, tris(2-chloroethyl) phosphate, tris(2-chloropropyl) phosphate, tris(2,3-dibromopropyl) phosphate, and combinations thereof. In addition to the above-mentioned halogen-substituted phosphates, it is also possible to use inorganic or organic flame-retarding agents, such as red phosphorus, aluminum oxide hydrate, antimony trioxide, arsenic oxide, ammonium polyphosphate and calcium sulfate, expandable graphite or cyanuric acid derivatives, e.g., melamine, or mixtures of two or more flame-proofing agents, e.g., ammonium polyphosphates and melamine, and, if desired, corn starch, or ammonium polyphosphate, melamine, and expandable graphite and/or, if desired, aromatic polyesters.

These are generally used at levels that are sufficient to achieve an impact on the fire performance, typically from 0.1 to 60 percent, preferably from 2 to 50 percent of the total mass of the isocyanate-reactive component. Also frequently employed additives or constituents are materials that serve as plasticizers. These may include, for example, alkyl phthalates, diacid esters, and epoxidized soybean oils. Additional options may include surfactants, foam stabilizers, cell regulators, fillers, dyes, pigments, hydrolysis-protection agents, and fungistatic and bacteriostatic substances.

Examples of suitable surfactants are compounds which serve to support homogenization of the starting materials and may also regulate the cell structure of the foamed plastics. Specific examples are salts of sulfonic acids, e.g., alkali metal salts or ammonium salts of dodecylbenzene- or dinaphthylmethanedisulfonic acid and ricinoleic acid; foam stabilizers, such as siloxane-oxyalkylene copolymers and other organopolysiloxanes, oxyethylated alkyl-phenols, oxyethylated fatty alcohols, paraffin oils, castor oil esters, ricinoleic acid esters, Turkey red oil and groundnut oil; and cell regulators, such as paraffins, fatty alcohols, and dimethylpolysiloxanes. The surfactants are usually used in amounts of 0.01 to 5 parts by weight, based on 100 parts by weight of the polyol component.

Fillers may also be used, in either the polyisocyanurate foam or in the polyisocyanurate adhesive. Such may include conventional organic and inorganic fillers and reinforcing agents including, for example, inorganic fillers, such as silicate minerals, for example, phyllosilicates such as antigorite, serpentine, hornblends, amphiboles, chrysotile, and talc; metal oxides, such as kaolin, aluminum oxides, titanium oxides and iron oxides; metal salts, such as chalk, barite and inorganic pigments, such as cadmium sulfide, zinc sulfide and glass, including for example kaolin (china clay), aluminum silicate and co-precipitates of barium sulfate and aluminum silicate, and natural and synthetic fibrous minerals, such as wollastonite, metal, and glass fibers of various lengths. Examples of suitable organic fillers are carbon black, melamine, colophony, cyclopentadienyl resins, cellulose fibers, polyamide fibers, polyacrylonitrile fibers, polyurethane fibers, and polyester fibers based on aromatic and/or aliphatic dicarboxylic acid esters, and in particular, carbon fibers.

The inorganic and organic fillers may be used individually or as mixtures and may be introduced into the isocyanate reactive group-containing or isocyanate group-containing components in amounts of from 0.5 to 40 percent by weight, based on the weight of the component into which it is introduced. However, if a mat is incorporated into the polyisocyanurate foam layer, its content of natural and/or synthetic fibers, whether woven or nonwoven, may comprise up to 80 percent by weight of the mat.

Further details on additives and assistants mentioned hereinabove may be obtained from the specialist literature, for example, from the monograph by J.H. Saunders and K.C. Frisch, High Polymers, Volume XVI, Polyurethanes, Parts 1 and 2, Interscience Publishers 1962 and 1964, respectively, or Kunststoff-Handbuch, Polyurethane, Volume VII, Carl-Hanser-Verlag, Munich, Vienna, 1st and 2nd Editions, 1966 and 1983.

Preparation of the Insulation Panels

In preparing the polyisocyanurate foam layer, it is typical practice in the art to add the blowing agent and trimerization catalyst, and any other selected additives, assistants and constituents, to the isocyanate-reactive component of the formulation, e.g., the polyol, and then to combine the isocyanate and the isocyanate-reactive components at the required isocyanate index, i.e., a ratio of isocyanate to isocyanate-reactive groups that is at least 1.8, and then to allow the completed formulation to foam and polymerize. In general, the polyisocyanurate foam layer may be made by either a continuous or a discontinuous process. In a continuous process, the formulation components for the layer are combined and cast continuously onto a substrate, which is continuously moving through a polymerization area (conveyor) in which the foam is forming while being constrained between the bottom substrate, the top substrate, and the lateral containment. After exiting the conveyor, the panels are cut to desired lengths. In a discontinuous process, the polyisocyanurate foam layer is produced by injecting the formulation components into a mold. Alternatively it is produced by pouring the formulation components onto a substrate that is the bottom surface of an open mold, with the lid that is closed immediately after the pouring is completed. As a mold is used, the foam is not able to rise freely and hence, the maximum rise is determined by the top portion of the mold. In any of these cases the end result may be a foam panel that is typically planar but that, depending on the shape of the mold, may be non-planar as well, and which has length and width dimensions that are substantially greater than its thickness dimension.

However, in the present invention at least one facing is juxtaposed with a surface (generally but not necessarily one of the larger planar surfaces) of the polyisocyanurate foam layer, hereinafter "layer surface." In the discontinuous production process, the facing or facings may be cut to size and pre-positioned inside the mold or on the substrate, before pouring or injecting the mixture of isocyanate and isocyanate-reactive components. In the continuous production process, also called the double band lamination process, usually two facings, in the form of continuous facing sheets, are positioned parallel to each other, with one above the other. The facings are driven to the conveyor, which has the purpose of both heating the facings and maintaining them in position. Just before entering the conveyor, an amount of the polyisocyanurate foam layer formulation is transferred onto a substrate corresponding to the lower facing, so that the rising foam is sandwiched between the lower and upper facing. The polymerization process, which includes foaming, is completed as the material moves along the conveyor, and then the faced polyisocyanurate foam panels are cut as the sandwich composite exit the conveyor, to produce sandwich foam panels with the desired thickness, width and length. Conveyor speed and temperature may be varied according to requirements.

The method of the present invention differs from the conventional protocols described hereinabove, however, in that a polyisocyanurate adhesive is interposed between the polyisocyanurate foam layer (which, once cured, is a rigid foam) and the selected facing. In many embodiments it is most convenient to apply the polyisocyanurate adhesive immediately after mixing (i.e., combining the polyisocyanurate adhesive isocyanate group-containing component and the polyisocyanurate adhesive isocyanate reactive group-containing component, including the trimerization catalyst, at an index of at least 1.8), while the material is still liquid, over the surface of the facing layer using methods known to those skilled in the art. Such methods may include, but are not limited to, use of a "drag bar," or of a spray machine, or other means to apply the liquid adhesive in a relatively uniform layer over an entire surface. The preferred embodiment is indeed to apply the liquid adhesive to the facing surface first, then to either promptly contact the adhesive-carrying facing surface to the layer surface, or to promptly inject or pour or deliver the polyisocyanurate foam formulation components onto the adhesive-carrying facing surface, or both. Accordingly, if the sandwich panel features the presence of a facing on the top and on the bottom surface, the adhesive-carrying facing may be the bottom one and/or the top one. The production process may be either continuous or discontinuous.

Of particular importance is timing herein, in that the liquid polyisocyanurate adhesive is applied such that it is ultimately interposed between a substantial portion of or, in preferred embodiments, all of the layer surface and facing surface, prior to completion of the foaming and polymerization of the layer surface and prior to completion of the polymerization of the adhesive. Without wishing to be bound by any theory, it is thought that this timing ensures the migration of at least a portion of the trimerization catalyst in the liquid adhesive into the still-polymerizing polyisocyanurate foam layer, and also ensures that at least a portion of the excess isocyanate groups in the liquid adhesive react with some of the isocyanate-reactive groups of the polyisocyanurate foam layer. The result is both desirable levels of green strength and rapid complete cure of the liquid adhesive such that the facing is more likely to remain bonded to the polyisocyanurate foam layer under challenging conditions than does the same combination of facing and polyisocyanurate foam layer when adhered using a different means and/or method.

The liquid polyisocyanurate adhesive may be prepared using any of the same materials as the polyisocyanurate foam layer, as listed and described hereinabove, including a compound containing terminal isocyanate groups and a compound containing terminal isocyanate-reactive groups. The isocyanate group-containing compound is, in preferred embodiments, a polymeric methylene diphenyl diisocyanate (PMDI). The isocyanate-reactive compound, or combinations thereof, may also be selected from the same compounds as are described hereinabove as suitable for preparing the polyisocyanurate foam layer.

In proportions, the components of the liquid polyisocyanurate adhesive are such that a true polyisocyanurate polymer, i.e., a solid, is formed therefrom, which means that the index is at least 1.8, i.e., there are at least 1.8 isocyanate groups for every isocyanate-reactive group in the adhesive. In certain particular embodiments it is preferred that the index be at least 2.0, and in other particular embodiments it is preferred that the index be at least about 2.5. Generally the index of the adhesive will be 7.00 or less.

The adhesive furthermore contains a trimerization catalyst, which again may be selected from any trimerization catalysts known in the art, such as, but not limited to, those described or listed hereinabove as also being useful in preparation of the polyisocyanurate foam layer. The amount of catalyst used in the adhesive layer is such that the reactivity of the adhesive, measured as gel time, is less than 6 minutes, preferably less than 5 minutes.

To prepare the liquid polyisocyanurate adhesive, it is necessary to contact the selected isocyanate group-containing material and isocyanate-reactive material, in the presence of the trimerization catalyst, under conditions suitable to result in reaction and polymerization thereof. Simple mixing, using conventional in-reactor mixing equipment or injection mixing equipment, may be employed. A temperature ranging from 10°C to 70°C is typically used to instigate and progress polymerization, and a range of from 30°C to 60°C is often preferred.

While it is possible to include additional materials in the formulation for the liquid polyisocyanurate adhesive, such is generally not necessary and may increase the cost and complexity of preparation. Such additional materials may include plasticizers, such as alkyl phthalates, diacid esters, epoxidized soybean oil (ESO), and methyl formate. Solvents such as acetone, toluene and methylethylketone may also optionally be employed, in order to modify the adhesive's rate of reaction or adhesion performance. Appropriate additional materials may be selected with reference to, for example, the descriptions of such included hereinabove with respect to the polyisocyanurate foam layer.

The kinematic viscosity of the liquid polyisocyanurate adhesive, immediately following combination of the isocyanate-containing and isocyanate-reactive compound(s) and prior to completion of the foaming and polymerization reactions, is such that the material has the flow qualities of a liquid. The desired flowability is limited only by the requirements of the application technology that will be used to distribute the liquid polyisocyanurate adhesive on the facing.

In preparing such sandwich panels it is desirable, in certain non-limiting embodiments, that the facing material may range in thickness from 100 micrometers ($\mu$m) to 5 mm, and in some embodiments may range from 200 $\mu$m to 2 mm, and in other embodiments, from 300 $\mu$m to 1 mm. The polyisocyanurate adhesive in average thickness, as an applied layer, from 10 to 500 $\mu$m, and in ranges embodiments from 100 to 300 $\mu$m. Finally, the polyisocyanurate foam layer may range in thickness, in certain embodiments, from 2 to 40 centimeters (cm); preferably from 2.5 to 35 cm; and more preferably from 3 to 30 cm.

It is further desirable that the density of the polyisocyanurate foam layer range from 20 to 400 grams per liter (g/L). In contrast, the density of the polyisocyanurate adhesive layer desirably ranges from 300 to 1300 g/L. In certain embodiments it is also possible to slightly foam the adhesive layer, which correspondingly reduces the density of the adhesive and may slightly augment the insulation performance of the sandwich panel as a whole. Means and methods to do this are the same as those described hereinabove with reference to the polyisocyanurate foam layer.

In the following examples, the compositions of the polyisocyanurate foam layer and on the adhesive are not limiting in any way, and are intended to be simply illustrative to of the invention disclosed herein.

EXAMPLE

Examples 1-2 and Comparative Examples 1-2

A series of four (4) insulating sandwich panels are prepared as follows.

A series of four identical polyisocyanurate foam layers are prepared by reacting a polymeric MDI (VORANATE™ M600, available from The Dow Chemical Company), featuring a viscosity of about 600 mPa·s (0.6 Pa·s) at 25°C, with a formulated polyol comprising a majority of an aromatic polyester polyol with a functionality of 2 and a hydroxyl number about 250, along with smaller quantities of polyether polyols initiated with water, glycerine, and sucrose, respectively, having hydroxyl numbers ranging from 200 to 500. In addition the formulated polyol contains about 20 percent by weight of tris(2-chloroisopropyl phosphate) (TCPP), a silicone surfactant, and amine based catatlysts. A blowing agent is also included and comprises about 1 part of water and also n-pentane in an amount sufficient to reach the desired foam free rise density. The reaction of the polymeric MDI with the formulated polyol is carried out at an NCO/OH ratio of about 2.8.

The polymeric MDI and the formulated polyol are processed and mixed with a high pressure foaming machine, and the reacting foaming mixture is immediately after poured into the mold.

Concurrently with preparing the polyisocyanurate foam formulation, a series of three adhesives is prepared from formulations as shown in Table 1.

Table 1

| Adhesive Formulation Constituents | Polyurethane adhesive* | Polyisocyanurate adhesive | Polyisocyanurate adhesive (higher index) |
|---|---|---|---|
| Polyol component: | | | |
| Castor oil** | 82.11 | 29.9 | 29.9 |
| Polyol A*** | 9.8 | 0 | 0 |
| Polyol B † | 0 | 70 | 70 |

(continued)

| Adhesive Formulation Constituents | Polyurethane adhesive* | Polyisocyanurate adhesive | Polyisocyanurate adhesive (higher index) |
|---|---|---|---|
| Polyol component: | | | |
| Tertiary amine catalyst ‡ | 3.5 | 0 | 0 |
| K carboxylate salt catalyst€ | 0 | 1.5 | 1.8 |
| Water (in raw materials) | 0.26 | 0.1 | 0.1 |
| Total pbw | 95.67 | 101.5 | 101.8 |
| Isocyanate component: | | | |
| VORANATE™ M 600§, used in an amount to obtain the reported NCO index | Index 115 | Index 200 | Index 300 |
| Pot life time (sec)***** | about 130 | about 130 | about 130 |

* not an adhesive of the invention
** Castor oil has an OH number of 150 mg KOH/g
*** Polyol A is a polypropylene glycol, having a hydroxyl number of 110 mg KOH/g
t Polyol B is a polypropylene glycol, having a hydroxyl number of 55 mg KOH/g
‡ Tertiary amine catalyst is a catalyst used for the isocyanate-OH reaction, the level used being sufficient to obtain an adhesive with a pot life of about 130 seconds
€ K carboxylate salt catalyst is a catalyst used primarily for the trimerization reaction
§ VORANATE™ M600 has a kinematic viscosity of 600 mPa.s (0.6 Pa's) at 25°C.
***** Pot life is defined as the length of time that a catalyzed resin system retains a viscosity low enough to be used in processing

Prior to pouring, a pre-cut metal facing is positioned on the bottom inner surface of a 40 x 70 x 10 centimeter (cm) metal mold that is temperature controlled at about 50°C. This metal facing covers the whole of the mold bottom inner surface. The metal facing, made of coated steel and having a thickness of about 0.45 mm, is similar to those typically used in the industry and is allowed to reach approximately the same temperature as the rest of the mold prior to pouring the foaming mixture.

Once both the polyisocyanurate foam formulation and the polyisocyanurate adhesive formulations are ready, the adhesive layer is applied to the metal facings (for Examples 1 and 2 and Comparative Example 2) according to the following procedure.

The two components of each adhesive formulation are combined in the proper ratio inside a cup, and then mixed with a HEIDOLPH™ Instruments GmbH mechanical stirrer at 1500 revolutions per minute (rpm) for 15 seconds. Each mixed, reacting adhesive is then immediately poured onto the metal facing in the mold, with Examples 1 and 2 carried out using two different index polyisocyanurate adhesives and Comparative Example 2 carried out using a polyurethane adhesive (Comparative Example 1 is carried out without any adhesive). The adhesive is immediately distributed using a draw bar, thus obtaining a uniform layer of 200 micron thickness. Then, the metal facing with the distributed adhesive thereon is immediately placed back inside the 40 x 70 x 10 cm mold that has been heated to 50°C, and allowed to remain there undisturbed for 60 seconds.

At this point, while the adhesive layer has not yet reached the state of complete polymerization, the polyisocyanurate foaming system is processed and poured into each mold against the adhesive-covered metal facing surface using a conventional high pressure foaming machine. The mold is then closed. Demolding is carried out 10 minutes after pouring, and the resulting composite panel has a polyisocyanurate foam layer density of about 51 kg/m$^3$.

The panels are then allowed to cure for about one week, in order to be sure that the measured properties are representative of the long term values.

Adhesion Testing:

Test specimens are cut to measure 100 x 100 mm, full-thickness, from the metal faced sandwich panel. The thickness of each specimen is then recorded, along with its length and width dimensions. Each specimen's facing is then glued to disposable plastic supports, using a two-component MDI-based glue. The supports are then fastened in a tensile testing machine configuration, and pulled apart at a rate of 50 millimeters per minute (mm/min), until there is a break between the facing and the polyisocyanurate foam. The maximum tensile strength of the sandwich panel, in kPa, may then be calculated using the following equation.

$$\sigma = \left[ \frac{F_{(max)}}{l \times b} \right] \times 1000$$

σ = the tensile strength of the sandwich panel (kPa)
F(max) = maximum tensile force recorded (N = MPa x mm$^2$)
l = length of the test specimen (mm)
b = width of the test specimen (mm)
1000 = conversion of MPa to kPa

It should be noted that, in all cases, the break during testing occurs close to the metal-foam interface, hence, the different values obtained via the calculations are deemed to be direct indications of the differing levels of performance of the various adhesives.

Test results are shown in Table 3, wherein the panels are identified as Examples 1 and 2 and Comparative Examples 1 and 2, and the adhesive used for each is specified. The panel of Comparative Example 1 is prepared like the other three panels, except that no adhesive is used and the polyisocyanurate foam layer is applied directly against the metal facing positioned inside the mold.

Table 3

|  | Comparative Example 1 | Comparative Example 2 | Example 1 | Example 2 |
|---|---|---|---|---|
| Type of adhesive | NO adhesive | Polyurethane adhesive | Polyisocyanurate adhesive | Polyisocyanurate adhesive (higher index) |
| Tensile strength values, N/m$^2$* | 228 | 217.5 | 285.4 | 317.1 |
| *Newtons per square meter | | | | |

This illustration shows overall that improved adhesion is achieved with use of the inventive adhesive and inventive method, when compared to the adhesion achieved with either a polyurethane type adhesive, or without any adhesive.

## Claims

1. A layered insulation panel comprising a polyisocyanurate foam layer having a layer surface adhered to a facing surface by a polyisocyanurate adhesive, provided that the polyisocyanurate adhesive has been interposed between the layer surface and the facing surface prior to completion of polymerization of both the layer surface and the polyisocyanurate adhesive, wherein the polyisocyanurate adhesive has an average thickness of from 10 to 500 μm.

2. The layered insulation panel of Claim 1 wherein the polyisocyanurate foam layer comprises a closed cell rigid polyisocyanurate foam.

3. The layered insulation panel of Claim 1 wherein the facing surface is a coated metal.

4. A method of preparing a layered insulation panel comprising the non-ordered steps of preparing a polyisocyanurate foam formulation; preparing a polyisocyanurate adhesive formulation; providing a facing layer; and distributing the foam formulation, the adhesive formulation, and the facing layer under conditions such that a layered insulation panel is formed, wherein the adhesive formulation is positioned between the facing layer and the foam formulation while both the adhesive formulation and the foam formulation are polymerizing and the foam formulation is forming a foam layer surface, such that at least a portion of the facing layer is adhered to at least a portion of the foam layer surface, wherein the polyisocyanurate adhesive has an average thickness of from 10 to 500 μm.

**5.** The method of Claim 4 wherein the polyisocyanurate foam formulation polymerizes to form a closed cell rigid foam.

**6.** The method of Claim 4 comprising either a continuous or discontinuous process.

**Patentansprüche**

**1.** Eine geschichtete Isolierplatte, beinhaltend eine Polyisocyanuratschaumschicht mit einer Schichtoberfläche, die mittels eines Polyisocyanuratklebstoffs an eine Stirnoberfläche geklebt ist, vorausgesetzt, dass der Polyisocyanuratklebstoff vor dem Abschluss der Polymerisation von sowohl der Schichtoberfläche als auch dem Polyisocyanuratklebstoff zwischen die Schichtoberfläche und die Stirnoberfläche gelegt wurde, wobei der Polyisocyanuratklebstoff eine durchschnittliche Dicke von 10 bis 500 μm aufweist.

**2.** Geschichtete Isolierplatte gemäß Anspruch 1, wobei die Polyisocyanuratschaumschicht einen geschlossenzelligen steifen Polyisocyanuratschaum beinhaltet.

**3.** Geschichtete Isolierplatte gemäß Anspruch 1, wobei die Stirnoberfläche ein beschichtetes Metall ist.

**4.** Ein Verfahren zur Herstellung einer geschichteten Isolierplatte, das die folgenden nicht geordneten Schritte beinhaltet: Herstellen einer Polyisocyanuratschaumformulierung; Herstellen einer Polyisocyanuratklebstoffformulierung; Bereitstellen einer Stirnschicht; und Verteilen der Schaumformulierung, der Klebstoffformulierung und der Stirnschicht unter Bedingungen, so dass sich eine geschichtete Isolierplatte bildet, wobei die Klebstoffformulierung zwischen der Stirnschicht und der Schaumformulierung positioniert ist, während sowohl die Klebstoffformulierung als auch die Schaumformulierung eine Polymerisierung erfahren, und wobei die Schaumformulierung eine Schaumschichtoberfläche bildet, so dass mindestens ein Teil der Stirnschicht an mindestens einem Teil der Schaumschichtoberfläche klebt, wobei der Polyisocyanuratklebstoff eine durchschnittliche Dicke von 10 bis 500 μm aufweist.

**5.** Verfahren gemäß Anspruch 4, wobei die Polyisocyanuratschaumformulierung eine Polymerisierung erfährt, um einen geschlossenzelligen steifen Schaum zu bilden.

**6.** Verfahren gemäß Anspruch 4, das entweder einen kontinuierlichen oder einen diskontinuierlichen Prozess beinhaltet.

**Revendications**

**1.** Un panneau d'isolation en couches comprenant une couche de mousse de polyisocyanurate ayant une surface de couche collée sur une surface faisant face par un adhésif polyisocyanurate, à condition que l'adhésif polyisocyanurate ait été interposé entre la surface de couche et la surface faisant face préalablement à l'achèvement d'une polymérisation à la fois de la surface de couche et de l'adhésif polyisocyanurate, dans lequel l'adhésif polyisocyanurate a une épaisseur moyenne allant de 10 à 500 μm.

**2.** Le panneau d'isolation en couches de la revendication 1 dans lequel la couche de mousse de polyisocyanurate comprend une mousse de polyisocyanurate rigide à alvéoles fermées.

**3.** Le panneau d'isolation en couches de la revendication 1 dans lequel la surface faisant face est un métal revêtu.

**4.** Une méthode de préparation d'un panneau d'isolation en couches comprenant les étapes non ordonnées consistant à préparer une formulation de mousse de polyisocyanurate ; à préparer une formulation d'adhésif polyisocyanurate ; à fournir une couche faisant face ; et à distribuer la formulation de mousse, la formulation d'adhésif, et la couche faisant face dans des conditions telles qu'un panneau d'isolation en couches soit formé, dans laquelle la formulation d'adhésif est positionnée entre la couche faisant face et la formulation de mousse tandis qu'à la fois la formulation d'adhésif et la formulation de mousse polymérisent et que la formulation de mousse forme une surface de couche de mousse, de telle sorte qu'au moins une portion de la couche faisant face soit collée sur au moins une portion de la surface de couche de mousse, dans laquelle l'adhésif polyisocyanurate a une épaisseur moyenne allant de 10 à 500 μm.

**5.** La méthode de la revendication 4 dans laquelle la formulation de mousse de polyisocyanurate polymérise pour former une mousse rigide à alvéoles fermées.

6. La méthode de la revendication 4 comprenant un procédé soit continu, soit discontinu.

# EP 2 488 705 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- High Polymers. **J.H. SAUNDERS ; K.C. FRISCH.** Polyurethanes. Interscience Publishers, 1962, vol. XVI
- Kunststoff-Handbuch, Polyurethane. Carl-Hanser-Verlag, 1966, vol. VII
- KUNSTSTOFF-HANDBUCH, POLYURETHANE. 1983